# EUROPÄISCHE PATENTSCHRIFT

(11) **EP 3 768 500 B1**
(45) Veröffentlichungstag und Bekanntmachung des Hinweises auf die Patenterteilung: **03.07.2024**
(21) Anmeldenummer: 19709928.6
(22) Anmeldetag: 08.03.2019
(51) Int. Cl.: B29D 11/00, G02C 7/02, G02B 1/10, G02C 11/00

(54) **BRILLENGLAS UND VERFAHREN ZU DESSEN HERSTELLUNG**
SPECTACLE LENS AND METHOD FOR PRODUCING SAME
VERRE DE LUNETTES ET PROCÉDÉ DE FABRICATION

(30) Priorität: 22.03.2018 DE 102018002384
(43) Veröffentlichungstag der Anmeldung: 27.01.2021
(73) Patentinhaber: Shape Engineering GmbH, 51105 Köln (DE)
(72) Erfinder: LUDERICH, Jörg, 40882 Ratingen NRW (DE); PÖPPERL, Christian, 42697 Solingen (DE); FRINGS, David, 58675 Hemer (DE)
(74) Vertreter: Cohausz Hannig Borkowski Wißgott
(86) Internationale Anmeldenummer: PCT/EP2019/055867
(87) Internationale Veröffentlichungsnummer: WO 2019/179791

(56) Entgegenhaltungen:
- WO-A1-02/31584
- DE-A1-102014 000 107
- DE-A1-102014 000 107
- US-A- 5 220 358
- US-A- 5 220 358
- US-A1- 2009 141 236
- US-A1- 2009 141 236
- US-A1- 2009 207 374
- US-A1- 2009 207 374
- US-B1- 6 786 596
- US-B1- 6 786 596

## Beschreibung

Die Erfindung betrifft ein Brillenglas, das auf dem äußeren Rand und/oder der Front- bzw. Rückfläche wenigstens eine Funktionsschicht aufweist, wobei die wenigstens eine Funktionsschicht ausgebildet ist durch einen auf den Rand und/oder die Front-/Rückfläche des Brillenglases in flüssiger Form aufgetragenen, chemisch oder durch Strahlung erhärteten Werkstoff, insbesondere der nach der Erhärtung mit dem Brillenglas stoffschlüssig verbundenen ist.

Die Erfindung betrifft weiterhin auch ein Verfahren zur Herstellung eines Brillenglases, wobei auf den Rand und/oder die Front-/Rückfläche des formgerandeten Brillenglases ein Material in flüssiger Form aufgetragen und chemisch oder durch Strahlung gehärtet wird. Bevorzugt ergibt sich dabei eine stoffschlüssige Verbindung zwischen dem Material des Brillenglases, insbesondere also zwischen einem Glas oder einem transparenten Kunststoff und dem aufgetragenen Material.

Ein solches Brillenglas und ein Verfahren zur Herstellung ist aus der von der Anmelderin selbst stammenden Patentanmeldung DE 10 2014 000 107 A1 bekannt. In dieser Patentanmeldung ist es beschrieben strangweise oder tröpfchenweise einen Werkstoff in flüssiger Form auf ein Brillenglas aufzutragen, um Strukturelemente auszubilden, die dazu dienen ein Brillenglas mit einer Brillenfassung zu verbinden. Eine weitere Funktionalisierung die über eine solche Befestigungsfunktion oder auch eine Schutzfunktion des Glasrandes hinausgeht, ist in dieser Publikation nicht benannt. Die strang- oder tröpfchenweise Auftragung kann auch bei vorliegender Erfindung vorgesehen sein.

Bei der Erfindung wird unter einem formgerandeten Brillenglas ein solches verstanden, welches um die optische Achse herum eine Form aufweist, die einer gewünschten Brillenglasform entspricht, wie sie zum Beispiel in einer typischen Brillenfassung zum Einsatz kommt. Eine solche Brillenfassung kann auch eine sogenannte randlose Fassung sein, bei der die Brillengläser lediglich im Bereich des Nasensteges und der Fassungsbügel von den Fassungselementen kontaktiert sind.

Ein solches formgerandetes Brillenglas ist bevorzugt ein solches, welches aus einem Brillenglasrohling dadurch hergestellt ist, dass das Brillenglas aus diesem Rohling herausgearbeitet ist, insbesondere durch materialabtragende oder herausschneidende Maßnahmen, wie z.B. Schleifen oder Laserschneiden. Ein Brillenglasrohling kann insbesondere eine üblicherweise kreisrunde Linse sein, die in der benötigten optischen Brechkraft/ Dioptrie von einem Hersteller angefertigt ist.

Als Nachteil wird es bei den im Stand der Technik bekannten Brillengläsern empfunden, dass diese außer ihrer typischer Weise vorgesehenen Funktion der Korrektur von Sehfehlern oder dem Schutz vor Sonnenlicht keine wesentlichen weiteren Funktionen aufweisen oder sofern weitere Funktionalitäten vorhanden sind diese durch mechanisch großbauende Anbauten an einer Brille realisiert sind.

Es ist daher eine Aufgabe der Erfindung ein Brillenglas und ein Verfahren zu dessen Herstellung bereitzustellen, dass die im Stand der Technik bekannten Brillengläser und Verfahren insoweit weiterbildet, als dass weitere Funktionalitäten erschlossen werden, die über eine Befestigungsfunktion aufgetragener Werkstoffe oder Materialien hinausgehen.

US 2009/141236 A1 offenbart ein Verfahren zur Herstellung eines Brillenglases gemäß dem Oberbegriff des Anspruchs 1.

Die vorliegende Erfindung bezieht sich auf ein Verfahren zur Herstellung eines Brillenglases nach Anspruch 1.

Besonders bevorzugt ist es vorgesehen, dass eine Funktionssicht gemäß der Erfindung eine Schichtdicke kleiner als 2 Millimeter, bevorzugt kleiner als 1 Millimeter aufweist, um so sicherzustellen, dass eine aufgetragene Funktionsschicht durch einen Benutzer im Wesentlichen nicht wahrnehmbar ist und das ästhetische Erscheinungsbild eines erfindungsgemäßen Brillenglases nicht negativ beeinflusst ist. In weiterer bevorzugter Ausgestaltung kann die Dicke einer Funktionsschicht noch über die vorgenannten Werte hinaus reduziert sein, insbesondere kleiner als 500 Mikrometer besonders bevorzugt kleiner als 250 Mikrometer.

Die Erfindung sieht vor, dass eine Funktionsschicht verfahrensgemäß derart realisiert wird, dass das die Funktionsschicht bildende Material in flüssiger Form auf eine Fläche des Brillenglases aufgetragen wird, insbesondere auf die Randfläche des Brillenglases, welche das Brillenglas in Umfangsrichtung um die optische Achse des Brillenglases herum umgibt und auf der Auftragungsfläche das Material vor dem Härten verläuft.

Durch das Verlaufen bildet das aufgetragene Material somit eine Schicht, die dünner ist als die Materialauftragstärke unmittelbar zum Zeitpunkt des Materialauftrages. Verfahrensgemäß ist der Prozess des Härtens derart gewählt, dass entweder die chemische Härtung oder die Strahlungshärtung erst einsetzt oder zumindest erst abgeschlossen ist, nachdem das Material über eine vorbestimmte Zeit verlaufen ist. Eine solche vorbestimmte Zeit kann bevorzugt im Bereich von 1 bis 10 Sekunden, weiter bevorzugt 1 bis 20 Sekunden und noch weiter bevorzugt 1 bis 30 Sekunden gewählt sein.

Erfindungsgemäß sieht das Herstellungsverfahren vor, dass beim Auftragen des Materials die jeweilige Materialmenge in Abhängigkeit der am Ort der Auftragung vorliegenden Randdicke des Brillenglases gewählt ist. Unter dem Ort der Auftragung wird dabei eine Umfangsposition des Brillenglases auf dem Rand verstanden. Insbesondere wird mit zunehmender Randdicke die Materialmenge gesteigert werden, um sicherzustellen, dass an einer jeweiligen Auftragsposition genügend Material vorliegt, um eine Bedeckung des Randes mit dem Material in der gewünschten Schichtstärke zu realisieren. An einer Umfangsposition kann das Material betrachtet in Richtung der optischen Achse bzw. in Richtung der Randicke an verschiedenen Positionen aufgetragen werden.

Erfindungsgemäß sieht es vor, dass vor dem Auftragen des Materials der Rand der formgerandeten Brillenglases hinsichtlich seiner Randdicke an einer Vielzahl von den Umfangsrichtungen aufeinander folgenden Messpositionen, also verschiedenen Umfangspositionen, vermessen wird und sodann die Menge und/oder axiale Position des Materialauftrages in Abhängigkeit der erfassten Messwerte gesteuert erfolgt. Eine solche Steuerung kann erfolgen in Verbindung mit wenigstens einer Applikationsvorrichtung, mit welcher das Material flüssig auf den Rand aufgetragen wird, wobei dieser Applikationsvorrichtung die zuvor erfassten Messwerte als Steuerungsgrößen zugeführt werden.

Beim Auftragen des Materials kann es vorgesehen sein das Brillenglas um seine optische Achse zu rotieren, wobei die Applikationsvorrichtung zumindest im Wesentlichen ortsfest zum Brillenglas ist, gegebenenfalls in Richtung der optischen Achse demnach in Richtung der Randdicke eine Spitze der Applikationsvorrichtung, aus welcher das Material austritt, verschoben werden kann, die Applikationsvorrichtung jedoch bezogen auf eine Winkelposition, die um die optische Achse herumgemessen ist, eine Ortsfestigkeit aufweist.

Alternativ kann es auch vorgesehen sein, die Applikationsvorrichtung um ein nicht rotierendes Brillenglas herumzuführen und bei dieser Bewegung in Umfangsrichtung das Material aus der Applikationsvorrichtung auf den Brillenglasrand aufzutragen.

Die Erfindung kann in einer Weiterbildung vorsehen, dass das aufzutragende Material betrachtet in der Umfangsrichtung des Brillenglasrandes in wenigstens zwei Strängen, bevorzugt wenigstens zwei parallel liegenden Strängen aufgetragen wird. Insbesondere bei Überschreiten der Randdicke über einen Grenzwert hinaus kann die Erfindung vorsehen, statt nur einen Strang zwei Stränge oder mehr Stränge nebeneinander aufzutragen, um so die Schichtdicke beim Prozess des Verlaufens des aufgetragenen Materials besser zu vergleichsmäßigen.

Das Auftragen in mehreren nebeneinander liegenden Strängen kann dabei über ein und dieselbe Applikationsvorrichtung nacheinander erfolgen, das heißt es wird in Umfangsrichtung durch diese eine Applikationsvorrichtung ein Strang nach dem anderen erstellt. Die Erfindung kann jedoch auch vorsehen, eine der Stranganzahl entsprechende Anzahl von Applikationsvorrichtungen zu verwenden, um die parallel liegenden Stränge zeitlich gleichzeitig nebeneinander auf den Glasrand anzubringen. Die Erfindung kann hier vorsehen, dass in Abhängigkeit der Randdicke an einer Umfangsposition des Brillenglasrandes nur eine oder gleichzeitig mehrere Applikationsvorrichtungen angesteuert werden, um das Material aufzutragen. Insbesondere wird bei Überschreiten eines Grenzwertes der Randdicke von einen Auftrag mit nur einer Applikationsvorrichtung auf einen gleichzeitigen Auftrag über mehrere (wenigstens zwei) Applikationsvorrichtungen umgeschaltet und bei Unterschreiten dementsprechend in der Anzahl der Applikationsvorrichtungen zurückgeschaltet.

Die verschiedenen Funktionen, die durch die aufgebrachte Funktionsschicht ausgeübt werden können in einer Vielzahl unterschiedlicher Ausführungen der Erfindung resultieren.

In einer möglichen Ausgestaltung kann es vorgesehen sein, dass eine optische Funktion ausgeübt wird durch die Nachbildung einer mechanischen Politur des Brillenglasrandes. So ist es beispielsweise bekannt, dass der Rand eines formgerandeten Brillenglases zur Verbesserung der optischen Erscheinung, das heißt hier des ästhetischen Erscheinungsbildes poliert wird, wodurch der Rand dem Betrachter weniger prägnant erscheint. Eine solche mechanische Politur mit Poliermitteln entlang der Brillenglasranderstreckung ist sowohl zeitlich als auch maschinell mit großen Aufwand verbunden.

Dem gegenüber bietet die Erfindung den Vorteil, dass auf den Rand, insbesondere entlang der gesamten Umfangserstreckung des Randes eine Schicht eines Materiales in flüssiger Form aufgetragen wird, die nach dem Auftrag und vor dem Härten über die gesamte Randbreite verläuft und hierdurch eine glatte Oberfläche ausbildet, die nach außen hin nach der Erhärtung des Materials den optischen Eindruck erweckt, als sei der ursprüngliche Brillenglasrand poliert worden.

Dieser Effekt wird im Wesentlichen dadurch erzielt, dass die verlaufene Oberfläche der aufgetragenen Funktionsschicht eine geringere Rauigkeit aufweist als die Rauigkeit der Fläche des Randes auf welcher die Funktionsschicht aufgetragen ist.

Insbesondere im Zusammenhang mit dieser Ausführung kann die bereits eingangs genannte Erfindungsvariante sinnvoll eingesetzt werden, dass nämlich die Menge des Materials der Funktionsschicht in Abhängigkeit der Randbreite aufgetragen wird, um so ein gleichmäßiges Verlaufen des Materials über den gesamten Rand sicherzustellen.

Die Erfindung kann hier weiterhin vorsehen, dass das Material der Funktionsschicht so ausgewählt wird, dass dessen Brechungsindex von dem Brechungsindex des Glasmaterials abweicht, insbesondere kann der Brechungsindex größer gewählt werden als der Brechungsindex des Materials des Brillenglases, um so weiterhin zu erzielen, dass in der aufgetragenen Funktionsschicht eine Totalreflektion stattfindet.

In anderer Ausgestaltung der Erfindung kann eine optische Funktion der Funktionsschicht auch dadurch ausgeübt werden, dass die Funktionsschicht einen Wellenleiter bildet, der auf oder entlang zumindest eines Teilbereiches des Randes entlang der Erstreckung des Umfanges des Glases angeordnet ist.

Hier kann ein solcher Wellenleiter durch eine einzige Funktionsschicht ausgebildet sein, die Erfindung kann jedoch auch vorsehen, mehrere Funktionsschichten, insbesondere solche mit unterschiedlichen Brechungsindizes übereinanderliegend auf dem Rand des Brillenglases anzuordnen. Insbesondere kann es bei einem Schichtaufbau vorgesehen sein, dass ein solcher Wellenleiter in seinen außenliegenden Schichten einen größeren Brechungsindex aufweist als in wenigstens einer weiter innen liegenden Schicht.

Unabhängig von der konkreten Ausgestaltung einer Wellenleiterfunktion mit wenigstens einer Funktionsschicht auf dem Rand des Brillenglases kann es in einer Anwendung vorgesehen sein, dass Licht über ein Kopplungselement in einen solchen Wellenleiter eingekoppelt wird, beispielsweise über ein Element der Brillenglasfassung, sodass von einer Lichtquelle, die zum Beispiel an einem Bügel der Fassung angeordnet sein kann, Licht über das Kopplungselement in die Funktionsschicht das heißt den Wellenleiter, eingekoppelt wird, um das Licht so entlang des Glasrandes zu einer gewünschten Wirkungsstelle zu führen, insbesondere einer Stelle, bei welcher das Licht ausgekoppelt werden soll. Eine solche Funktion kann Anwendung finden bei solchen Brillen, mit welchen der Träger einer solchen Brille sein Arbeitsfeld beleuchten möchte, wie dies zum Beispiel im medizinischen Bereich bei Ärzten oder auch bei Feinmechanikern der Fall ist.

In einem erfindungsgemäßen Herstellungsverfahren kann es vorgesehen sein, dass zur Anordnung eines Kopplungselementes an der Funktionsschicht in das noch nicht gehärtete Material der Funktionsschicht nach dessen Auftrag ein Kopplungselement eingelegt wird, das zur Einkopplung von einem optischen Signal in die gehärtete Schicht dient. Ein solches Kopplungselement kann zum Beispiel ein transparentes sphärisches Element, insbesondere also eine Glaskugel sein.

Diese Ausführung der Verfahrensdurchführung kann dabei nicht nur in Verbindung mit einer optischen Wirkung der Funktionsschicht vorgesehen sein, sondern insbesondere auch in Verbindung mit einer elektrischen oder elektronischen Wirkung einer Funktionsschicht, wenn nämlich über ein Kopplungselement eine Einkopplung von einem elektrischen Signal vorgesehen sein soll. In diesem Fall kann ein Kopplungselement durch ein elektrisches Steckelement realisiert sein, dessen Kontakte in die Funktionsschicht hineinreichen die elektrisch leitend ist.

Eine weitere Ausgestaltung der Erfindung kann es vorsehen, dass eine Funktionssicht eine optische Funktion dadurch ausübt, dass die Funktionsschicht eine thermochrome oder elektrochrome Schicht auf oder entlang zumindest eines Teilbereiches der Brillenglasoberfläche, bevorzugt der gesamten Brillenglasoberfläche ausbildet. Unter der Brillenglasoberfläche wird dabei diejenige Oberfläche des Brillenglases verstanden, die der optischen Korrektur eines Sehfehlers des Benutzers dient. Es handelt sich somit also um die im Wesentlichen großen Flächen des Brillenglases und nicht um eine Randfläche.

Diese genannte Brillenglasoberfläche, von denen ein Brillenglas somit zwei aufweist sind im Wesentlichen senkrecht zur optischen Achse des Brillenglases angeordnet. Eine thermochrome Schicht bewirkt dabei, dass mit Temperaturänderung die Lichtabsorption der Schicht geändert wird, wobei dies bei einer elektrochromen Schicht durch unterschiedliche Bestromung bzw. verschiedene Spannungen erfolgt.

Besonders in der letztgenannten Ausführung kann die Erfindung auch eine optische Funktion einer Funktionsschicht sowie eine elektrische Funktion einer Funktionsschicht miteinander kombinieren, indem nämlich beispielsweise eine Funktionsschicht vorgesehen ist, um eine elektrochrome Schicht auf der Brillenglasoberfläche auszubilden und eine weitere elektrisch leitfähige Funktionsschicht auf dem Brillenrand vorgesehen ist, um der elektrochromen Schicht die benötigte Spannung bzw. den benötigten Strom zum Betrieb zuzuführen.

Die Erfindung kann in weiterhin anderer Ausführung vorsehen, dass durch die Funktionsschicht mit optischer Funktion ein lichtemittierendes Element ausgebildet wird. Beispielsweise kann eine solche Funktionsschicht eine OLED ausbilden. Besonders auch in dieser Ausführungsform können wiederum Funktionsschichten mit optischer Funktion und elektrischer Funktion kombiniert werden, um nämlich zum einen das lichtemittierende Element mit optischer Funktion zu bilden und zum anderen, um mittels einer Funktionsschicht mit elektrischer Funktion eine Stromleitung bzw. Spannungsführung zu der Funktionsschicht mit der optischen Funktion, wie zum Beispiel der genannten OLED zu realisieren.

Besonders zur Ausbildung von optischen Funktionen kann die Erfindung vorsehen, dass mittels der Funktionsschicht der Transmissionsgrad oder der Reflektionsgrad für Licht gegenüber dem Brillenglasmaterial geändert insbesondere gesenkt oder gesteigert wird. Eine Funktionsschicht kann in ihrem Material somit beispielsweise auch eine andere optische Dichte aufweisen als dass Glasmaterial des Brillenglases. Eine unterschiedliche optische Dichte kann dabei sowohl durch einen anderen Brechungsindex vorliegen was auch durch absorbierende Materialien innerhalb des Materials oder dadurch, dass das Material welches für die Bildung der Funktionsschicht vorgesehen ist selbst für Licht eine für eine gewünschte optische Wirkung benötigte Lichtabsorption aufweist.

Besonders bei sehr dünnen Schichtstärken können mit einer Funktionsschicht auch Interferenzeffekte des reflektierten Lichtes hervorgerufen werden. In besonders bevorzugter Ausführung ist dafür die Dicke der wenigstens eine Funktionsschicht im Bereich der 1-bis 10-fachen Lichtwellenlänge gewählt zu welcher ein Interferenzeffekt erzeugt werden soll.

Eine Ausführung der Erfindung kann es vorsehen, dass eine Funktionsschicht eine magnetische Funktion ausübt durch ein von der wenigstens einen Funktionsschicht selbst erzeugtes Magnetfeld oder aber dass eine Magnetisierbarkeit der wenigstens einen Funktionsschicht vorliegt unter Einwirkung eines externen Magnetfeldes auf die wenigstens eine Funktionsschicht.

Beispielsweise kann es vorgesehen sein, in eine Funktionsschicht magnetische oder magnetisierbare Partikel einzulagern. Solche Partikel können bereits in dem flüssigen aufzutragenden Material vorgesehen sein, welches nach dem Auftrag die Funktionsschicht ausbildet. Solche magnetische oder magnetisierbare Partikel werden demnach unmittelbar mit dem Materialauftrag auf der zu beschichtenden Fläche des Brillenglases, insbesondere des Brillenglasrandes aufgetragen.

Bei einer möglichen Anwendung kann es hier vorgesehen sein, dass eine solche Funktionsschicht dazu dient, an einem Brillenglas andere Elemente zu befestigen. Es kann sich dabei beispielsweise um Elemente der Brillenglasfassung wie einem Nasensteg oder Brillenglasbügel handeln.

Ebenso kann es vorgesehen sein an dem Brillenglas über eine solche magnetische oder magnetisierbare Funktionsschicht weitere optische wirksame Elemente anzuordnen. Zum Beispiel können Sonnenbrillen-Vorsatzgläser durch magnetische Wirkung an einem derart erfindungsgemäß ausgestatteten Brillenglas befestigt werden, wenn nämlich ein solches Vorsatzglas ebenso ein magnetisches oder magnetisierbares Element aufweist, sodass ein solches Element mit einer magnetisch wirkenden Funktionsschicht des Brillenglases zusammenwirkt und eine Befestigung des Vorsatzglases am Brillenglas erzeugt werden kann.

Allgemein kann eine elektrische oder elektronische Funktion einer Funktionsschicht dadurch ausgeübt werden, dass die Funktionsschicht eine elektrische Leitfähigkeit aufweist. Dafür kann das Material der Funktionsschicht selbst elektrisch leitfähig sein oder es können in das Material elektrisch leitfähige Elemente, insbesondere Partikel eingelagert sein. Auch hier können solche eingelagerten elektrisch leitfähigen Partikel bereits in dem flüssigen Material während des Auftrages vorliegen. Insbesondere kann die Ausführung hier so gewählt werden, dass die leitfähigen Partikel innerhalb des Materials der Funktionsschicht und insbesondere sodann auch nach Aushärtung in der fertigen Funktionsschicht eine solche Dichte aufweisen, dass die Partikel einander berühren und so entlang der Schicht eine elektrische Stromleitung ohne Unterbrechung möglich ist.

Ein Funktionsschicht kann auch einen Isolator oder einen Halbleiter ausbilden.

Eine Ausführung kann hier auch vorsehen, dass durch Anordnung mehrerer Funktionsschichten zueinander, insbesondere von mehreren Funktionsschichten über- und/oder nebeneinander wenigstens ein elektrisches oder elektronisches Bauteil ausgebildet wird. Derart angeordnete Funktionsschichten können bevorzugt verschiedene elektrischen Eigenschaften aufweisen, es können also in einer solchen Anordnungen leitende und/oder nichtleitende und/oder halbleitende Funktionsschichten kombiniert sein. Durch die Gesamtheit einer solchen Anordnung kann z.B. ein elektrisches oder elektronisches Bauteil gebildet sein.

In einer wiederum anderen Ausführung kann die Erfindung auch vorsehen, in einer Funktionsschicht elektrische Energie zu speichern oder alternativ auch zu erzeugen, z.B. durch Lichteinfall.

Ausführungsformen der Erfindung sind in den Figuren dargestellt.

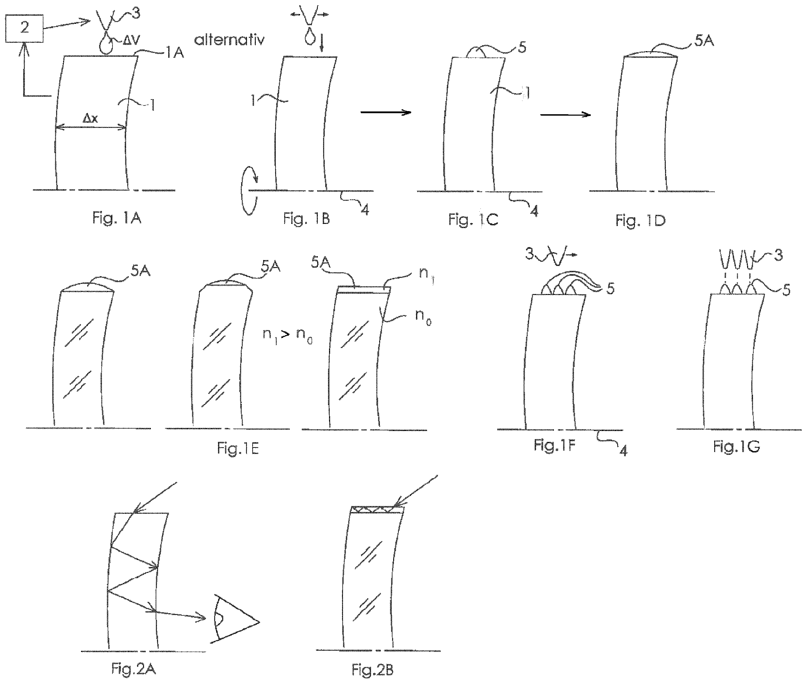

Die Figuren 1 visualisieren den Auftrag eines von der Randdicke Δx abhängigen Volumens, z.B. Tropfenvolumes ΔV eines flüssigen Materials auf den Rand 1A eines formgerandeten Brillenglases 1. Hierfür kann durch eine nicht gezeigte Messvorrichtung die Randdicke Δx am Ort des Auftrages erfasst und an eine Steuerung 2 übermittelt werden, welche eine Dosiervorrichtung einer Auftragseinheit 3, z.B. einer Düse ansteuert.

Figur 1B visualisiert hier bei der gegenüber Figur 1A geringeren Brillenglasdicke, dass das Tropfenvolumen ΔV geringer ausfällt. Weiterhin ist dargestellt, dass das Brillenglas 1 um die optische Achse 4 beim Auftrag gedreht werden kann.

Gemäß den zeitlich aufeinander folgenden Figuren 1C und 1D verläuft der aufgetragene Tropfen oder Strang 5 des die Funktionsschicht 5A bildenden Materials, insbesondere bis zur vollständigen Bedeckung des Randes 1A. Hierdurch können gemäß den Figuren 1E verschiedene Formen der Funktionsschicht 5A gebildet werden, z.B. nach außen konvexe oder auch plane Formen.

Figur 1F zeigt die Möglichkeit durch Positionierung der Auftragseinheit 3 entlang der optischen Achse 4 mehrere Stränge 5 von Material nacheinander zu applizieren, die sodann verlaufen. Figur 1G zeigt demgegenüber alternativ die Möglichkeit, die mehreren Stränge 5 gleichzeitig über mehrere Auftragseinheiten 3 zu applizieren. In diesem Beispiel sind 3 Stränge gezeigt, was die Erfindung jedoch nicht beschränkt.

Die Figuren 2 verdeutlichen die vorteilhafte Wirkung einer als Politur wirkenden Funktionsschicht in Figur 2B im Vergleich zu einer klassischen Politur des Randes 1A in der Figur 2A. Bei der klassischen Politur wird eingekoppeltes Licht bis zum Auge des Brillenträgers transportiert. Bei der als Politur wirkenden Funktionsschicht der Figur 2B bleibt das Licht hingegen aufgrund der Totalreflexion in der Funktionsschicht in dieser gefangen und stört den Brillenträger somit nicht. Bevorzugt ist hierfür der Brechungsindex der Funktionsschicht größer als der des Brillenglases, wie es schon zur Figur 1E rechts gezeigt ist.

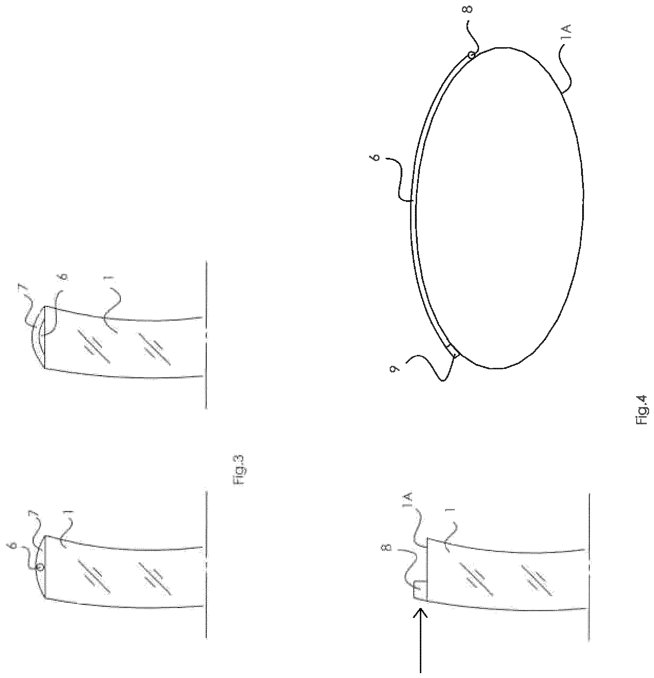

Figur 3 zeigt links einen Wellenleiter 6 der in einer als Versiegelung wirkenden Funktionsschicht 7 auf dem Rand des Brillenglases 1 eingebettet ist. Hier ist zumindest die Versiegelung durch das verlaufene und gehärtete aufgetragene Material ausgebildet.

Figur 3 zeigt rechts die Möglichkeit einen Wellenleiter 6 unterhalb einer Versiegelung 7 anzuordnen. Hier können Wellenleiter 6 und Versiegelung 7 durch verschiedene flüssig aufgetragene und dann gehärtete Materialien erzeugt sein. Die Auftragung kann sowohl für den Wellenleiter 6 als auch die Versiegelung 7 wie zu den Figuren 1 gezeigt erfolgen.

Figur 4 zeigt in verschiedenen Ansichten einen entlang des Brillenglasrandes 1A erstreckten Wellenleiter 6, der durch einen Strang flüssig aufgetragenen und dann gehärteten Materials ausgebildet sein kann. Der Wellenleiter 6 verbindet hier das an einem Ende angeordnete Einkoppelelement 8 für Licht mit einer am anderen Ende angeordneten Photosensorik 9. Diese beiden Elemente 8,9 können jeweils in das noch flüssige Material vor der Härtung eingelegt sein.

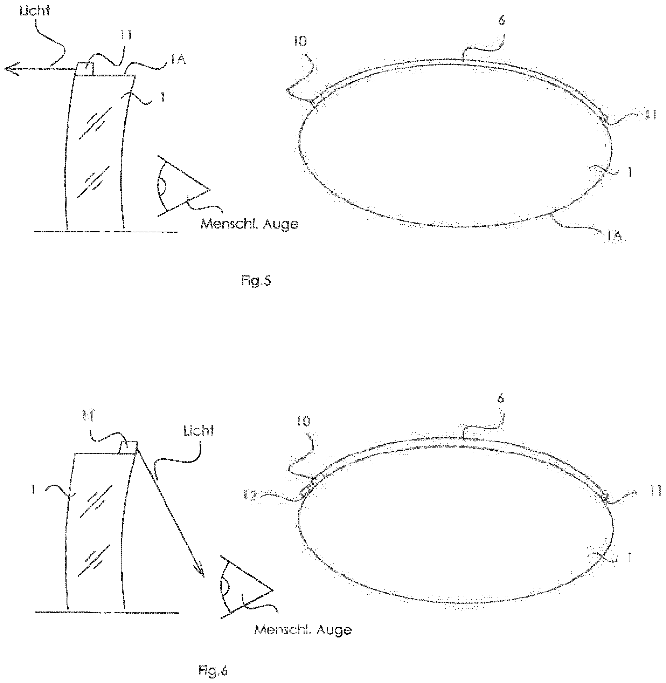

Figur 5 zeigt die Verbindung zwischen einer Strahlungsquelle 10 und einem Auskoppelelement 11 mittels eines Wellenleiters 6, der gemäß der Erfindung als flüssiges Material aufgetragen und dann gehärtet ist. Auch hier sind Strahlungsquelle 10 und Auskoppelelement 11 vorzugsweise in das noch flüssige Material vor der Härtung eingelegt

Licht der Strahlungsquelle 10 kann so entlang des Randes 1A zum Auskoppelelement 11 transportiert werden, insbesondere von dort zum Auge des Brillenträgers gerichtet sein, so dass Signalisierungen möglich sind.

Figur 6 zeigt eine Weiterbildung von Figur 5 gemäß welcher der Strahlungsquelle 10 noch eine Sensorik 12 zugeordnet ist, z.B. zur Ansteuerung der Strahlungsquelle 10 in Anhängigkeit von Sensorwerten. So kann in Abhängigkeit von erfassten Sensorwerten eine Signalisierung an das Auge erfolgen.

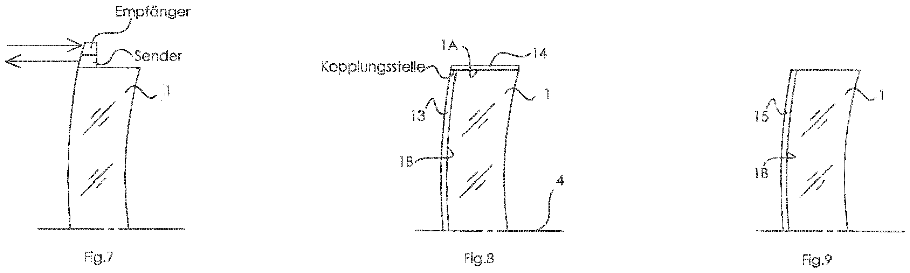

Die Figur 7 zeigt die gestapelte Anordnung eines Senders und Empfängers, z.B. für elektromagnetische Wellen (z.B. Licht), die in das flüssig applizierte und gehärtete Material eingebettet sind.

Gemäß Figur 8 ist flüssig aufgetragenes und erhärtetes Material zur Bildung von Funktionsschichten sowohl flächig auf die optisch wirksame Oberfläche 1B (durch welche Licht in Richtung der optischen Achse 4 hindurchtritt) des Brillenglases 1 als auch auf den Rand 1A aufgetragen. Die Oberflächenbeschichtung kann z.B. eine elektrochrome Schicht 13 ausbilden und die Funktionsschicht auf dem Rand 1A eine elektrische Leiteranordnung 14 bilden, mittels der diese elektrochrome Schicht 13 elektrisch angesteuert werden kann. Hierzu sind die beiden Schichten 13 und 14 miteinander kontaktiert, z.B. einer Kopplungsstelle an der Übergangskante zwischen den Flächen 1A und 1B. So kann z.B. eine Tönung oder allgemein Farbänderung des Brillenglases 1 erzeugt werden.

Gemäß Figur 9 bildet die auf die Oberfläche 1B aufgetragene Funktionsschicht eine thermochrome Schicht 15, deren Farbe / Absorption temperaturabhängig geändert wird.

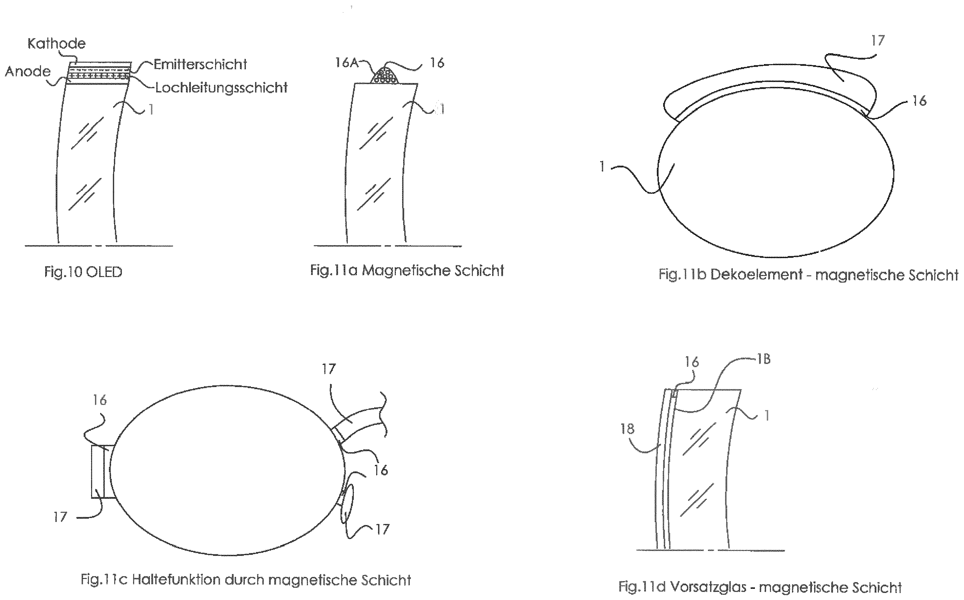

Gemäß Figur 10 kann mittels mehrerer gestapelt übereinander aufgetragener Schichten z.B. eine OLED-Anordnung realisiert werden. Die unterste und oberste Schicht können Elektrodenschichten bilden zur Bestromung von dazwischen angeordneten Schichten aus Emitterschicht und Lochleitungsschicht. Alle diese Schichten können mittels eines jeweils dafür vorgesehenen Materials flüssig aufgetragen werden und dann erhärten, insbesondere im Wesentlichen wie zu den Figuren 1 visualisiert.

Gemäß Figur 11a kann das flüssig aufgetragenen und gehärtete Material eine magnetische oder magnetisierbare Schicht 16 ausbilden, z.B. durch in einem Material enthaltene magnetische / magnetisierbare Partikel 16A.

Figur 11b visualisiert, dass eine solche Schicht 16 als Befestigungsmittel dienen kann z.B. für ein Dekorationselement oder allgemein jegliches andere Element 17, das eine magnetische Wechselwirkung mit der Schicht 16 eingehen kann. Gemäß Figur 11c können solche befestigbaren Elemente 17 z.B. durch Fassungselemente (z.B. Brillenbügel, Brücke, Nasenpad) einer Brille ausgebildet sein, die selbst magnetisch oder magnetisierbar sind und somit magnetisch an einer magnetischen / magnetisierbaren Funktionsschicht 16 anhaften.

Gemäß Figur 11d kann eine magnetische / magnetisierbare Funktionsschicht 16 auch auf der frontalen Oberfläche 1B eines Brillenglases 1 angeordnet sein und z.B. zur Befestigung eines Vorsatzglases 18 dienen, das magnetisch hieran anhaftet.

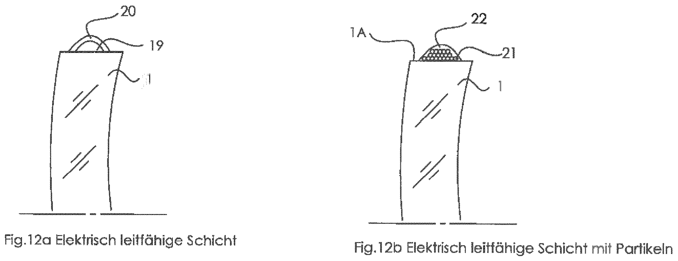

Figur 12a zeigt die Ausbildung eine elektrisch leitfähigen Schicht 19, die von einer isolierenden Schicht 20 überdeckt ist. Beide Schichten sind bevorzugt durch jeweiliges Material flüssig aufgetragen, welches nach dem Verlaufen gehärtet ist.

Figur 12b zeigt, dass zur Bildung einer leitfähigen Schicht z.B. elektrisch leitfähige Partikel 21 in ein isolierendes Bindemittel 22 eingebunden sind, hier auf den Rand 1A des Brillenglases.

## Patentansprüche

1. Verfahren zur Herstellung eines Brillenglases, wobei auf den Rand (1A) des formgerandeten Brillenglases (1), welches aus einem Brillenglasrohling herausgearbeitet ist, ein Material in flüssiger Form aufgetragen wird, auf der Auftragungsfläche das Material vor dem Härten verläuft und chemisch oder durch Strahlung gehärtet wird, wobei durch das Material auf dem Glas wenigstens eine Funktionsschicht (5A, 6, 7, 13, 14, 15, 16, 19, 20, 22) gebildet wird, welche eine optische Funktion, magnetische Funktion oder elektrische oder elektronische Funktion aufweist, **dadurch gekennzeichnet, dass** vor dem Auftrag des Materials der Rand (1A) des Brillenglases hinsichtlich seiner Randdicke (Δx) an einer Vielzahl von in Umfangsrichtung aufeinanderfolgenden Messpositionen vermessen wird und die Menge (ΔV) und / oder Position des Materialauftrages in Abhängigkeit der erfassten Meßwerte gesteuert erfolgt, wobei die Steuerung in Verbindung mit wenigstens einer Applikationsvorrichtung erfolgt, mit welcher das Material flüssig auf den Rand aufgetragen wird, wobei dieser Applikationsvorrichtung die zuvor erfassten Messwerte als Steuergrößen zugeführt werden.

2. Verfahren nach Anspruch 1, **dadurch gekennzeichnet, dass** das Material in mehreren parallel liegenden Strängen (5) aufgetragen wird.

3. Verfahren nach Anspruch 1 oder 2, **dadurch gekennzeichnet, dass** in das noch nicht gehärtete Material nach dessen Auftrag ein Kopplungselement (8) eingelegt wird, dass zur Einkopplung von einem optischen oder elektrischen Signal in die gehärtete Schicht dient.

4. Verfahren nach einem der vorherigen Ansprüche, **dadurch gekennzeichnet, dass** eine Funktionsschicht (6, 13, 15) mit einer optischen Funktion gebildet wird, welche
a. eine mechanische Politur des Randes (1A) dadurch nachbildet, dass die Rauigkeit der Funktionsschicht geringer ist als die Rauigkeit der Fläche des Randes (1A), auf welcher die Funktionsschicht aufgetragen wird, oder
b. einen Wellenleiter (6) auf oder entlang zumindest eines Teilbereiches des Randes (1A) entlang der Erstreckung des Umfangs des Glases (1) bildet, oder
c. eine thermochrome oder elektrochrome Schicht (13, 15) auf oder entlang zumindest eines Teilbereiches der Brillenglasoberfläche (1B) bildet, oder
d. ein Licht emittierendes Element bildet.

5. Verfahren nach einem der vorherigen Ansprüche, **dadurch gekennzeichnet, dass** eine Funktionsschicht (16) gebildet wird, die eine magnetische Funktion ausübt durch ein von der wenigstens einen Funktionsschicht (16) selbst erzeugtes Magnetfeld oder eine Magnetisierbarkeit der wenigstens einen Funktionsschicht (16) unter Einwirkung eines Magnetfeldes auf die wenigstens eine Funktionsschicht (16).

6. Verfahren nach Anspruch 5, **dadurch gekennzeichnet, dass** mit einer magnetisch wirkenden Funktionsschicht (16) ein Halteelement ausbildet wird zur Befestigung des Brillenglases (1) an einem anderen Element.

7. Verfahren nach einem der vorherigen Ansprüche 1 bis 3, **dadurch gekennzeichnet, dass** eine Funktionsschicht (22) gebildet wird, die eine elektrische oder elektronische Funktion ausübt durch
a. eine elektrische Leitfähigkeit der wenigstens einen Funktionsschicht (22) selbst oder darin eingelagerter Elemente (21), oder
b. durch Anordnung mehrerer Funktionsschichten zueinander, die durch ihre Anordnung zueinander gemeinsam wenigstens ein elektrisches oder elektronisches Bauteil ausbilden, oder
c. Speicherung von elektrischer Energie in der Funktionsschicht.

## Claims

1. Method for producing a spectacle lens, wherein a material is applied in liquid form to the edge (1A) of the edged spectacle lens (1), which is worked out of a spectacle lens blank, the material runs on the application surface prior to hardening and is hardened chemically or by radiation, wherein the material on the lens forms at least one functional layer (5A, 6, 7, 13, 14, 15, 16, 19, 20, 22) which has an optical function, magnetic function or electrical or electronic function, **characterized in that,** prior to the application of the material, the edge (1A) of the spectacle lens is measured with regard to its edge thickness (Δx) at a multiplicity of peripherally successive measurement positions and the quantity (ΔV) and/or position of the material application is effected in controlled fashion depending on the acquired measured values, wherein the control is effected in connection with at least one application device which is used to apply the material liquidly to the edge, wherein the previously acquired measured values are fed as control variables to this application device.

2. Method according to Claim 1, **characterized in that** the material is applied in multiple parallel strands (5) .

3. Method according to Claim 1 or 2, **characterized in that** a coupling element (8) is inserted into the not yet hardened material after application thereof, said coupling element being used to couple an optical or electrical signal into the hardened layer.

4. Method according to one of the preceding claims, **characterized in that** a functional layer (6, 13, 15) having an optical function is formed, which
a. simulates mechanical polishing of the edge (1A) in that the roughness of the functional layer is lower than the roughness of that surface of the edge (1A) to which the functional layer is applied, or
b. forms a waveguide (6) on or along at least one subregion of the edge (1A) along the extent of the periphery of the lens (1), or
c. forms a thermochromic or electrochromic layer (13, 15) on or along at least one subregion of the spectacle lens surface (1B), or
d. forms a light-emitting element.

5. Method according to one of the preceding claims, **characterized in that** a functional layer (16) is formed, which performs a magnetic function by a magnetic field generated by the at least one functional layer (16) itself or a magnetizability of the at least one functional layer (16) under the action of a magnetic field on the at least one functional layer (16).

6. Method according to Claim 5, **characterized in that,** with a magnetically acting functional layer (16), a holding element is formed for fastening of the spectacle lens (1) to another element.

7. Method according to one of the preceding Claims 1 to 3, **characterized in that** a functional layer (22) is formed, which performs an electrical or electronic function by
a. an electrical conductivity of the at least one functional layer (22) itself or elements (21) embedded therein, or
b. by arrangement of multiple functional layers relative to one another, which together form, due to their arrangement relative to one another, at least one electrical or electronic component, or
c. storage of electrical energy in the functional layer.

## Revendications

1. Procédé de fabrication d'un verre de lunettes, un matériau étant appliqué sous forme liquide sur le rebord (1A) du verre de lunettes à bord moulé (1), lequel est réalisé à partir d'une ébauche de verre de lunettes, le matériau s'écoulant sur la surface d'application avant d'être durci et étant durci chimiquement ou par rayonnement, au moins une couche fonctionnelle (5A, 6, 7, 13, 14, 15, 16, 19, 20, 22) étant formée par le matériau sur le verre, laquelle présente une fonction optique, une fonction magnétique ou une fonction électrique ou électronique,
**caractérisé en ce qu'**avant l'application du matériau, le rebord (1A) du verre de lunettes est mesuré en ce qui concerne son épaisseur de bord (Δx) en une pluralité de positions de mesure se succédant dans la direction périphérique et la quantité (ΔV) et/ou la position de l'application de matériau est commandée en fonction des valeurs de mesure acquises, la commande étant effectuée en liaison avec au moins un dispositif d'application au moyen duquel le matériau est appliqué sous forme liquide sur le rebord, les valeurs de mesure préalablement acquises étant transmises audit dispositif d'application en tant que grandeurs de commande.

2. Procédé selon la revendication 1, **caractérisé en ce que** le matériau est appliqué en plusieurs cordons parallèles (5).

3. Procédé selon la revendication 1 ou 2, **caractérisé en ce qu'**un élément de couplage (8), qui sert au couplage d'un signal optique ou électrique dans la couche durcie, est inséré dans le matériau non encore durci, après son application.

4. Procédé selon l'une quelconque des revendications précédentes, **caractérisé en ce qu'**une couche fonctionnelle (6, 13, 15) présentant une fonction optique est formée, laquelle
a. reproduit un polissage mécanique du rebord (1A) en faisant en sorte que la rugosité de la couche fonctionnelle soit inférieure à la rugosité de la surface du rebord (1A) sur laquelle la couche fonctionnelle est appliquée, ou
b. forme un guide d'ondes (6) sur ou le long d'au moins une partie du rebord (1A) le long de l'extension de la périphérie du verre (1), ou
c. forme une couche thermochromique ou électrochromique (13, 15) sur ou le long d'au moins une partie de la surface (1B) du verre de lunettes, ou
d. forme un élément émettant de la lumière.

5. Procédé selon l'une quelconque des revendications précédentes, **caractérisé en ce qu'**une couche fonctionnelle (16) est formée, laquelle exerce une fonction magnétique par l'intermédiaire d'un champ magnétique généré par ladite au moins une couche fonctionnelle (16) elle-même ou une aptitude à la magnétisation de ladite au moins une couche fonctionnelle (16) sous l'effet d'un champ magnétique sur ladite au moins une couche fonctionnelle (16).

6. Procédé selon la revendication 5, **caractérisé en ce qu'**un élément de maintien est formé au moyen d'une couche fonctionnelle (16) à effet magnétique pour la fixation du verre de lunettes (1) à un autre élément.

7. Procédé selon l'une quelconque des revendications 1 à 3 précédentes, **caractérisé en ce qu'**une couche fonctionnelle (22) est formée, laquelle exerce une fonction électrique ou électronique au moyen
a. d'une conductivité électrique de ladite au moins une couche fonctionnelle (22) elle-même ou d'éléments (21) incorporés dans celle-ci, ou
b. d'un agencement les unes par rapport aux autres de plusieurs couches fonctionnelles qui, par leur agencement les unes par rapport aux autres, forment ensemble au moins un composant électrique ou électronique, ou
c. d'un stockage d'énergie électrique dans la couche fonctionnelle.
